# EUROPÄISCHE PATENTSCHRIFT

(11) **EP 1 565 503 B1**
(45) Veröffentlichungstag und Bekanntmachung des Hinweises auf die Patenterteilung: **20.08.2014**
(21) Anmeldenummer: 03785533.5
(22) Anmeldetag: 21.11.2003
(51) Int. Cl.: C08F 287/00, C08F 8/00, C08F 8/46, C08L 51/00, C09J 151/00, C09D 151/00

(54) **FUNKTIONALISIERTE STYROL/OLEFIN-BLOCKKOPOLYMERE**
FUNCTIONALIZED STYROL/OLEFIN BLOCK COPOLYMERS
COPOLYMERES SEQUENCES STYRENE/OLEFINE FONCTIONNALISES

(30) Priorität: 26.11.2002 DE 10254962; 12.03.2003 DE 10311987
(43) Veröffentlichungstag der Anmeldung: 24.08.2005
(73) Patentinhaber: BYK Kometra GmbH, 06258 Schkopau (DE)
(72) Erfinder: GERECKE, Jochen, 06122 Halle (DE); HÄUSSLER, Lutz, 06108 Halle (DE); RAPTHEL, Inno, 06120 Halle (DE)
(74) Vertreter: Fischer, Volker
(86) Internationale Anmeldenummer: PCT/DE2003/003892
(87) Internationale Veröffentlichungsnummer: WO 2004/048426

(56) Entgegenhaltungen:
- EP-A- 0 703 279
- EP-A- 0 792 894
- EP-A- 0 805 827
- WO-A-93/24537
- WO-A-95/16718
- WO-A-02/093157
- DE-A- 10 213 909
- DE-A- 19 745 700
- DE-A- 19 914 146
- GB-A- 1 383 017

## Beschreibung

Die Erfindung betrifft funktionalisierte Styrol/Olefin-Blockcopolymere mit einem Funktionalisierungsgrad zwischen 0,02 und 10 Masse-%.

Hydrierte lineare Styrol/Butadien (und/oder Isopren)-Blockcopolymere sowie auch hydrierte radiale Styrol/Dien- Blockcopolymere mit einem Restanteil an ungesättigten Bindungen < 20%, vorzugsweise = 5 %, sind für zahlreiche Einsatzgebiete, die eine erhöhte Haftfestigkeit der auf diesem Wege erhaltenen Styrol/Olefin-Blockcopolymere benötigen und eine verbesserte Verträglichkeit zu polaren thermoplastischen Kunststoffen besitzen sollen, nicht ohne Weiteres verwendbar.

Für ihren Einsatz als Adhesives bzw. Haftvermittler in Laminaten und Folienverbunden sowie als Verträglichkeitsvermittler in unterschiedlichen Polymerblends und/oder -composites werden die Styrol/Olefin-Blockcopolymere deshalb in einem zusätzlichen Verfahrensschritt, zumeist mittels Pfropfung von carboxylgruppenhaltigen Monomeren, wie besonders α,ß-ungesättigten Dicarbonsäuren bzw. deren Anhydriden, vorzugsweise Maleinsäureanhydrid, oder auch von epoxygruppenhaltigen Monomerverbindungen, wie besonders Glycidyl(meth)acrylat, funktionalisiert.

Die Ankopplung von solchen Funktionsmonomeren erfolgt an eine durch Radikalübertragung oder energiereiche Strahlung an den mittels selektiver Hydrierung der Butadien- und/oder Isopren-Segmente erhaltenen elastomeren Ethen-Buten- oder Ethen-(Ethen-)Propen-Blöcken der Blockcopolymerisate erzeugte Radikalstelle. Dabei werden - unter Berücksichtigung der spezifischen Reaktionskomponenten - verschiedene Pfropfpolymerisationstechnologien angewandt.

So wird das Funktionsmonomer in einem Extruder auf ein Blockcopolymer-Rückgrat, vorzugsweise Styrol/Ethen-Buten/Styrol- (SEBS) oder Styrol/Ethen-Propen/Styrol- (SEPS) und Styrol/Ethen-Ethen-Propen/Styrol-Dreiblockcopolymere (SEEPS) sowie entsprechende Vierblockcopolymere der Struktur SEPSEP bzw. SEBSEB, zumeist unter Verwendung einer organischen Peroxyverbindung als Radikalbildner mit einer für eine Reaktionstemperatur zwischen 150 und 250 °C relevanten Halbwertszeit, in der Schmelze gepfropft (EP 0173380 A1, EP 0 085 115 B1, EP 0 216 347 B1, EP 0 262 691 B1, EP 0 371 001 B1, EP 0 322 977 B1; US 5.066.726).

Die für die Schmelzepfropfung zu wählende Reaktionstemperatur ist von der Schmelzeviskosität der verwendeten Styrol/Olefin-Blockcopolymere abhängig. So sind lineare Dreiblockcopolymere SEBS und SEPS bzw. SEEPS mit gewichtsmittleren Molmassen M_{w} > 50.000 g/mol im Allgemeinen nur unter Akzeptanz eines höheren Grades des Molmassenabbaus und Blockcopolymere mit M_{w} > 150.000 g/mol nur mittels Zusatz eines Fließbeschleunigers unter Anwendung von zumeist sehr hohen Reaktionstemperaturen bis oberhalb 300 °C funktionalisierbar (EP 0261748 A2). Bei diesen hohen Temperaturen treten in Gegenwart von Peroxiden starke Zersetzungserscheinungen auf. Andererseits entziehen sich die Monomeren wegen ihrer hohen Flüchtigkeit der Pfropfreaktion, was ein wesentlicher Grund für die geringe Pfropfeffizienz ist.

Die Forderung nach funktionalisierten Blockcopolymeren mit M_{w} > 70.000 g/mol resultiert aus der Notwendigkeit, die mechanische und thermische Belastbarkeit der daraus hergestellten thermoplastischen Elastomer (TPE)-Compounds zu verbessern, insbesondere niedrigere Druckverformungsreste und ein verbessertes Fogging-Verhalten zu erreichen. Die Blockcopolymere benötigen aber solche hohen Aufschmelztemperaturen, die bei der Pfropfung in der Schmelze ihre Degradation verursachen. Des Weiteren sind auf Grund der bei den hohen Reaktionstemperaturen freigesetzten toxischen Dämpfe von Monomeren und flüchtigen (niedermolekularen und oligomeren) Reaktionsnebenprodukten erhebliche Korrosionserscheinungen im Reaktionsextruder zu beobachten.

Neben der Schmelzepfropfung (reaktive Extrusion) ist die Lösungspfropfung der Blockcopolymere bei niedrigeren Temperaturen bekannt (US 4.692.357, US 4.883.834, EP 0173380 A1). Diese Pfropftechnologie ist aber auf Grund der Verwendung größerer Mengen an Lösemittel, besonders wegen der nach der erfolgten Pfropfung aus dem Reaktionsprodukt notwendigen Abtrennung und Wiedergewinnung des Lösemittels sowie der Produktreinigung, sehr kostenaufwendig.

Wird die Funktionalisierung, insbesondere die Maleinierung, ohne Initiator-Zusatz durchgeführt, koppeln die Monomermoleküle mittels der so genannten ENE-(Additions-)Reaktion an die in den olefinischen Blöcken nach der selektiven Hydrierung der Dien-Blöcke verbliebenen Doppelbindungen an (US 4.427.828, EP 0 173 380 A1).

Als Alternative zur Modifizierung der Styrol/Olefin-Blockcopolymere in ihrem Schmelze- oder Lösungszustand ist die bei Temperaturen bis maximal 100 °C durchgeführte Funktionalisierung fester partikulärer Blockcopolymer-Rückgrate bekannt. Unter dieser als Festphasen-Funktionalisierung bezeichneten Technologie ist das Pfropfen von Monomermolekülen, die Carboxyl- bzw. Anhydrid-, Epoxy- oder auch andere funktionelle Gruppen haben, auf das in pulverigem, körnigem, krümeligem, flockigem, granularem oder anderem trocken-fließfähigen Zustand vorliegende Rückgratpolymer zu verstehen (EP 0642538 B1, DE 4342605 A1).

Der Vorteil der Modifizierung der Rückgratpolymere (auch als Pfropfsubstrate bezeichnet) in ihrem trocken-fließfähigen Zustand bei Temperaturen deutlich unterhalb ihrer Schmelz- bzw. Erweichungspunkte liegt gegenüber der bei wesentlich höheren Temperaturen durchgeführten Schmelzemodifizierung in der Vermeidung bzw. starken Zurückdrängung des Auftretens toxischer Dämpfe von Monomeren und flüchtigen Reaktionsnebenprodukten sowie in der schonenderen Behandlung und damit der Degradations-Minimierung der eingesetzten Pfropfsubstrate.

Der Nachteil der bekannten, bei Reaktionstemperaturen zwischen 40 und 100 °C, vorzugsweise zwischen 50 und 90 °C, durchgeführten Festphasen-Funktionalisierung besteht - trotz Verwendung hoher Initiatorkonzentrationen - in den geringen Reaktionsgeschwindigkeiten sowie der Bildung heterogener Pfropfprodukte (EP 0 642 538 B1, DE 43 42 605 A1).

Hochmolekularere und damit mechanisch und thermisch höher belastbare Styrol/ Olefin-Blockcopolymere sind mit einem hohen Ölzusatz > 20 Masse-%, im Allgemeinen 60-150 Masseteile paraffinisches und/oder naphthenisches Prozessöl auf 100 Masseteile Blockcopolymerisat, im gleichen Reaktionstemperaturbereich zwischen 50 und 90 °C mit vertretbaren Umsätzen pfropfmodifizierbar (DE 195 02 206 A1, EP 0 805 827 B1). Der hohe Ölanteil hat sich aber für die Herstellung anspruchsvoller TPE-Compounds, insbesondere für die Anwendung im Automobilsektor und für andere hochwertige technische und Haushaltserzeugnisse, als Schwachpunkt herausgestellt.

Das Eigenschaftsprofil der mittels bekannter Festphasenpfropfung erhaltenen modifizierten Styrol/Olefin-Blockcopolymere genügt nicht den hohen Anforderungen bezüglich Hitzebeständigkeit und mechanischer Belastbarkeit, was generell auf die Prozessführung im Temperaturbereich unterhalb 100 °C und der dafür angewandten Rezepturierung, einschließend auch entweder zu niedrige Blockcopolymer-Molmassen oder zu hohe Prozessölanteile, zurückzuführen ist.

Außer der oben genannten Festphasen-Pfropffunktionalisierung von Styrol/Olefin-(Multi)Blockcopolymeren, inbesondere ihre Carboxylierung, bei Reaktionstemperaturen unterhalb 100°C ohne Ölzusatz oder in Anwesenheit eines größeren Anteils an Weichmacheröl (WO93/24537 A1, EP 0805827 B1) ist auch die mehrstufige Pfropfmodifizierung von Styrol/Olefin-Blockcopolymeren oberhalb 100°C in der Festphase bekannt, wonach in einer 1. Stufe n-Butylacrylat (BA) bzw. eine BA-haltige Monomermischung und einer nachfolgenden 2. Stufe Maleinsäureanhydrid (MSA) bzw. ein MSA-haltiges Monomergemisch auf ein im Allgemeinen eine größere Menge paraffinisches und/oder naphthenisches Öl enthaltendes Styrol/Olefin Blockcopolymer (blend) cogepfropft werden (DE 10213909 A1). Der Nachteil der Blockcopolymere mit aufgepfropften BA-Anteil besteht in ihrer schwerigen Verarbeitbarkeit (schmales Verarbeitungsfenster) inbesondere auf Grund ihrer Klebrigkeit sowie hohen Schmelzviskosität, und ihrer dadurch bedingten stark eingeschrankten Anwendung. DE 19745700, EP0703279, und WO9516718 offenbaren funktionalisierte Styrol/Olefin-Blockcopolymere in Formmassen.

>

Die Aufgabe der vorliegenden Erfindung bestand in der Entwicklung von funktionalisierten Styrol/Olefin-Blockcopolymeren mit Funktionalisierungsgraden zwischen 0,02 und 10 Masse-%, die die beschriebenen Nachteile bekannter funktionalisierter Styrol/Olefin-Blockcopolymerisate, insbesondere ihre eingeschränkte thermische und mechanische Belastbarkeit, nicht aufweisen und damit einen erweiterten Einsatz als Adhesive, Kopplungsagens, Haft- und Verträglichkeitsvermittler gestatten, sowie in der Entwicklung eines Verfahrens zu ihrer Herstellung.

Gegenstand der vorliegenden Erfindung sind funktionalisierte Styrol/Olefin-Blockcopolymere mit einem Funktionalisierungsgrad zwischen 0,02 und 10 Masse-%, erhältlich durch ein Verfahren, bei dem
- 70 bis 99,7 Masse-% eines partikulären Stryrol/Olefin-Blockcopolymers mit einer Schmelzflussrate MFR (230 °C/2,16 kg) von 200 g/10 min bis MFR (300 °C/2,16 kg) von < 0,2 g/10 min (nach ISO 1133) sowie einem mittleren Teilchendurchmesser zwischen 0,01 und 8 mm (Pfropfsubstrate) unter Aufrechterhaltung ihres fest-fluiden Zustandes mittels
- 0,3 bis 20 Masse-% eines Funktionsmonomers, ausgewählt aus einer Reihe von möglichen Funktionsmonomeren, umfassend die α,β-ethylenisch ungesättigte Dicarbonsäure Fumarsäure und ihr Anhydrid, Itaconsäureanhydrid sowie das α,β-ethylenisch ungesättigte Epoxid Glycidylacrylat, einschließlich Mischungen des Funktionsmonomers mit einem Comonomer, und unter Verwendung von
- einer auf das Blockcopolymer-Rückgrat bezogenen Konzentration zwischen 0,01 und 1 Masse-% eines organischen peroxidischen Radikalbildners, der eine Halbwertszeit zwischen 2 und 150 min im Temperaturbereich zwischen 230 und 70 °C besitzt, wobei der peroxygruppenhaltige Radikalbildner unter tert.-Butylperbenzoat, Dicumylperoxid, 2,5-Dimethyl-2,5-di(tert.-Butylperoxy)hexan, 2,5 Dimethyl-2,5-di(tert.-Butylperoxy)hexin-(3) und Di-tert.-Butylperoxid ausgewählt wird,
bei Reaktionstemperaturen oberhalb von 100 °C, die zwischen 100 und 200 °C liegen, pfropfmodifiziert wird.

Als zu modifizierende Pfropfsubstrate können lineare oder radiale Stryrol/Olefin-Mehrblockcopolymerisate, vorzugsweise lineare Styrol/Olefin-Drei- und -Vierblockcopolymere mit einem Gesamt-Stryolanteil zwischen 5 und 85 Masse-%, bezogen auf die gesamte Blockcopolymermasse, in trockenfließfähiger Konsistenz, vorzugsweise pulveriger, flockiger, krümeliger, körniger, granularer oder anderer partikulärer Form, eingesetzt werden.

Die Styrol/Olefin-Blockcopolymere werden mittels bekannter Verfahren durch selektive Hydrierung von linearen und radialen Blockcopolymeren, die aus monovinylaromatischen Kohlenwasserstoffsegmenten, vorzugsweise aus Styrol und/oder substituierten (alkylierten und/oder halogenierten) Styrolen aufgebauten Blöcken (S), und konjugierten Dien-Segmenten, vorzugsweise aus Butadien-(1,3) und/oder Methylbutadien-(1,3) (Isopren) aufgebauten Blöcken (B und/oder I), wobei die unterschiedlichen Blöcke (S, B und/oder I) scharf voneinander getrennt sein oder "verschmierte" Übergänge (tapered sections) aufweisen können, mit olefinischen Restunsättigungsgraden < 20 %, vorzugsweise ≤ 5 %, erhalten.

Besonders geeignete Rückgratpolymere sind die durch selektive Hydrierung von linearen Styrol/Butadien/Styrol-Dreiblockcopolymeren (symmetrische SBS bzw. asymmetrische SBS', wobei S und S' Styrolblöcke mit unterschiedlichen Sequenz-Molmassen darstellen) mit einem in den Endblöcken (S, S') im Blockcopolymer enthaltenen Gesamtstyrolanteil zwischen 5 und 85 Masse-%, vorzugsweise zwischen 10 und 70 Masse-%, sowie einem im Butadienmittelblock enthaltenen Vinylgruppengehalt zwischen 10 und 80 %, vorzugsweise zwischen 25 und 65 %, hergestellten Styrol/Ethen-Buten/Styrol-Dreiblockcopolymere (SEBS, SEBS') sowie die entsprechenden aus Styrol/Isopren/Styrol- (SIS bzw. SIS') oder Styrol/Butadien-Isopren/Styrol-Dreiblockcopolymeren (SBIS bzw. SBIS') hergestellten Styrol/Ethen-Propen/Styrol-(SEPS, SEPS') oder Styrol/Ethen-Ethen-Propen/Styrol-Dreiblockcopolymere (SEEPS, SEEPS').

Auch die entsprechenden Vierblockcopolymere mit jeweils einem zusätzlichen olefinischen Außenblock EB oder EP bzw. EEP (SEBSEB, SEPSEP bzw. SEEPSEEP), wobei die Styrol- und/oder Olefinblöcke gleiche oder auch unterschiedliche Sequenz-Molmassen besitzen können, sind als erfindungsgemäße Rückgratpolymerisate einsetzbar.

Die erfindungsgemäß verwendbaren Styrol/Olefin-Mehrblockcopolymere überstreichen einen Schmelzviskositätsbereich entsprechend MFR (230 °C/2,16 kg) von 200 g/10 min bis MFR (300 °C/2,16 kg) von < 0,2 g/10 min (nach ISO 1133), denen im Allgemeinen Molekulargewichte M_{w} zwischen 20.000 und 500.000 g/mol, vorzugsweise M_{w} zwischen 40.000 und 300.000 g/mol, zuzuordnen sind.

Die Blockcopolymer-Rückgrate sind auch in Form von Zusammensetzungen aus 80-100 Masse-%, vorzugsweise 90-99,9 Masse-%, Styrol/Olefin-Blockcopolymer und 20-0,0 Masse-%, vorzugsweise 10-0,05 Masse-%, eines organischen Lösemittels und/oder eines vollständig oder überwiegend paraffinische und/oder naphthenische Anteile enthaltenden Prozessöls verwendbar. Neben der Einsatzmöglichkeit üblicher aromatischer oder (cyclo-)aliphatischer Lösemittel ist vor allem ein geringer Prozessöl-Zusatz bevorzugt, der - im Unterschied zu hohen Ölkonzentrationen entsprechend der bekannten Festphasenpfropfung (EP 0 805 827 B1) - die Struktur des Blockcopolymer-Rückgrats und damit sein Aufschmeizverhalten nicht verändert. Geringe Anteile an Lösemittel oder Prozessöl dienen zur besseren Initiator- und gegebenenfalls Monomerdispergierung auf dem Pfropfsubstrat und darüber hinaus als Hilfsstoff für die vorgesehene spätere Pfropfprodukt-Verarbeitung, insbesondere als Verträglichkeitsvermittler bei der Herstellung spezieller Compounds.

Die Funktionsmonomere (FM) können auch als Mischung mit einem Comonomer (CM) aus der Reihe der unpolaren oder gegenüber dem verwendeten FM eine deutlich geringere Hydrophilie aufweisenden α,β-ethylenisch-ungesättigten niedermolekularen Verbindungen entsprechend Zusammensetzungen 100-20 Masse-% FM und 0-80 Masse-% CM, vorzugsweise 90-30 Masse-% FM und 10-70 Masse-% CM, eingesetzt werden.

Als Comonomere werden besonders monovinylaromatische Verbindungen, vorzugsweise Styrol und/oder α-Methylstyrol, und/oder C₁- bis C₁₂-Alkylester der Acryl- oder Methacrylsäure, wie besonders Ethylacrylat (EA) und/oder n-Butylacrylat (BA) und/oder Methylmethacrylat (MMA), verwendet. Styrol ist das bevorzugte Comonomer.

Für eine Reihe von Anwendungsfällen haben sich "(Co)Pfropf"-Anteile mittels Verwendung von FM/CM-Mischungen, insbesondere MSA/Styrol- oder auch AS/Stryrol- sowie GMA/Styrol-Zusammensetzungen, für die Steuerung spezieller Pfropfprodukteigenschaften als vorteilhaft erwiesen.

Die radikalisch initiierte Pfropfreaktion wird, insbesondere zur Erreichung höherer Funktionalisierungsgrade sowie einer gleichmäßigen Pfropfung, in Gegenwart eines organischen peroxygruppenhaltigen Radikalbildners mit einer Halbwertstemperatur nach einer Stunde (gemessen als 0,2-molare Lösung in Benzol) zwischen 70 und 200 °C durchgeführt.

Ausgewählt dafür sind Dibenzoylperoxid (DBPO) mit T_{HW/1h} von 92 °C, tert.-Butylperbenzoat (TBPB) mit T_{HW/1h} von 125 °C, Dicumylperoxid (DCP) mit T_{HW/1h} von 135 °C, 2,5-Dimethyl-2,5-di(tert.-butylperoxy)hexan (DHBP) mit T_{HW/1h} von 138 °C, 2,5-Dimethyl-2,5-di(tert.-butylperoxy)hexin-(3) (DYBP) mit T_{HW/1h} von 149 °C und Di-tert.-butylperoxid (TBP) mit T_{HW/1h} von 149 °C, die in einer auf das Blockcopolymer-Rückgrat bezogenen Konzentration zwischen 0,01 und 1 Masse-% eingesetzt werden.

Für die erfindungsgemäßen Reaktionstemperaturen oberhalb 100 °C sind DBPO, TBPB, DCP, DHBP, DYBP und TBP in einer auf das Blockcopolymer-Rückgrat bezogenen Konzentration zwischen 0,01 und 1 Masse-% von besonderem Vorteil. Solche niedrigen Initiatorkonzentrationen sind für die bisher üblichen Festphasen-Pfropfprozesse nicht bekannt.

Zweckmäßig ist es, Polymerisationsmischungen aus 0,3 bis 20 Masse-% FM, vorzugsweise 0,5 bis 10 Masse-% FM, einschließend FM/CM-Mischungen mit bis maximal 80 Masse-% CM-Anteil, und Radikalbildner entsprechend Masseverhältnissen aus einzusetzendem(n) Monomer(en) (FM + CM) und Radikalbildner zwischen 200 und 0,2, vorzugsweise zwischen 50 und 1, zu verwenden.

Weiterer Gegenstand der vorliegenden Erfindung ist ein Verfahren zur Herstellung von funktionalisierten Styrol/Olefin-Blockcopolymeren mit einem Funktionalisierungsgrad zwischen 0,02 und 10 Masse-%, gekennzeichnet dadurch, dass
A) in der Dispergierstufe
   - 70 bis 99,7 Masse-% eines partikulären Styrol/Olefin-Blockcopolymers mit einer Schmelzflussrate MFR (230 °C/2,16 kg) von 200 g/10 min bis MFR (300 °C/2,16 kg) von < 0,2 g/10 min (nach ISO 1133) sowie einem mittleren Teilchendurchmesser (d_{T}) zwischen 0,01 und 8 mm allein oder gegebenenfalls zusammen mit
   - einer auf das Blockcopolymer-Rückgrat bezogenen Konzentration zwischen 0,01 und 1 Masse% eines organischen peroxidischen Radikalbildners als in Anspruch 1 definiert, der eine Halbwertszeit zwischen 2 und 150 min im Temperaturbereich zwischen 230 und 70 °C besitzt, bei einer Dispergiertemperatur (T_{D}) im Bereich zwischen 10 und 50 °C vorgelegt wird und anschließend
   - 0,3 bis 20 Masse-% eines Funktionsmonomers (FM) aus der Reihe der α,β-ethylenisch ungesättigten Dicarbonsäuren und/oder ihrer Anhydride oder der α,β-ethylenisch ungesättigten Epoxide Glycidylacrylat, gegebenenfalls in Form ihrer Mischungen mit bis maximal 80 % Comonomer (CM), bezogen auf die Gesamtmonomer (FM + CM)-Masse, aus der Reihe der monovinylaromatischen Verbindungen und/oder der C₁- bis C₁₂-Alkylester der (Meth)Acrylsäure, hinzugesetzt werden und die Reaktionsmischung unter gleichzeitiger Dispersion mittels Stickstoffspülung inertisiert wird und danach
B) in der Aufheizstufe
   die Mischung von der Dispergiertemperatur T_{D} auf die Endreaktionstemperatur T_{R} zwischen 100 und 200 °C unter Aufrechterhaltung der fest-fluiden Konsistenz der Reaktionsmischung aufgeheizt wird und anschließend
C) in der Reaktionsstufe
   unter Aufrechterhaltung der Endreaktionstemperatur T_{R} (± 10 °C) zwischen 100 und 200 °C die Pfropfreaktion in der fest-fluiden Reaktionsmischung bis zum Endumsatz geführt wird
   und danach
D) in der Desorptionsstufe
   unter Temperaturabsenkung mittels Durchleiten von Stickstoff und gegebenenfalls unter Absenkung des Druckes im Reaktionsgefäß bei einer Desorptionstemperatur T_{Des} zwischen der Reaktionstemperatur T_{R} und 80 °C der nicht umgesetzte Monomeranteil aus der Reaktionsmischung entfernt sowie gegebenenfalls vorhandener Restinitiator deaktiviert wird und anschließend
nach Temperaturabsenkung auf eine Endtemperatur unterhalb 80 °C das trockene funktionalisierte Styrol/Olefin-Blockcopolymer dem Reaktionsgefäß entnommen wird.

Die den einzelnen Verfahrensstufen A) bis D) zuordenbaren Zeiten sind innerhalb weiter Bereiche wählbar. Als besonders vorteilhafte Zeitspannen für das erfindungsgemäße Verfahren haben sich herausgestellt:
- für die Dispergierstufe A) eine Dispergierzeit t_{D} zwischen 5 und 60 min,
- für die Aufheizstufe B) eine Aufheizzeit t_{A} zwischen 5 und 120 min,
- für die Reaktionsstufe C) eine Reaktionszeit t_{R} zwischen 5 und 90 min sowie
- für die Desorptionsstufe D) eine Desorptionszeit t_{Des} von 5 bis 120 min.

Die Aufheizstufe B), in der - in Abhängigkeit vom Radikalangebot, insbesondere von Initiatorart und -konzentration - die Pfropfreaktion beginnt und bis zu einem bestimmten Umsatz geführt wird, kann unterschiedlich gestaltet werden. Technologisch bevorzugt ist entweder eine durchgängige Aufheizung in einer einzigen Etappe (ohne Zwischenstopp) in der Zeit t_{A} direkt auf T_{R} oder in zwei Etappen (mit Zwischenstopp), wonach in einem ersten Zeitintervall t_{A}* < t_{A} bis zur Erreichung einer vorläufigen Reaktionstemperatur T_{R}* < T_{R}, bei der über einen Zeitabschnitt t_{R}* die Reaktion abläuft, und anschließend in einer Zeitspanne t_{A} - (t_{A}*+ t_{R}*) von T_{R}* auf die Endreaktionstemperatur T_{R} aufgeheizt wird.

Die Funktionalisierung der erfindungsgemäßen Blockcopolymere kann ohne Zusatz eines Radikalbildners erfolgen, wobei die Doppelbindungen im olefinischen Mittelblock einen Beitrag zur "Anbindung" von Bernsteinsäureanhydridgruppen leisten kann.

Der konkrete Einsatz des peroxidischen Radikalbildners, d. h. die Wahl in Bezug auf seine chemische Struktur, Halbwertszeit und seine einzusetzende Konzentration richtet sich nach dem zu erreichenden Funktionalisierungsgrad. Des Weiteren erfolgt der genaue Abgleich mit den jeweils aktuellen Reaktionsbedingungen, insbesondere T_{R} und t_{R}, Art und Konzentration an FM und CM sowie der Form der Zugabe der Reaktionskomponenten (batch- oder semibatch-Fahrweise).

Die Herstellung der Reaktionsmischung, ihre Dispergierung und Inertisierung entsprechend Stufe A) und Aufheizung auf T_{R} entsprechend Stufe B) sowie die - im Allgemeinen in der Stufe B) beginnende und - in der Reaktionsstufe C) fortgeführte Funktionalisierungsreaktion, d. h. die Umsetzung des FM oder FM/ CM-Gemisches bei Reaktionsendtemperaturen (T_{R}) zwischen 100 und 200 °C, vorzugsweise zwischen 105 und 180 °C, werden zweckmäßigerweise im Reaktionsgefäß, in dem die Reaktionsmischung im fest-fluiden Zustand gehalten wird, durchgeführt.

Nach erfolgter Funktionalisierung wird bei Desorptionstemperaturen T_{Des} vorzugsweise zwischen T_{R} und 100 °C und Desorptionszeiten t_{Des} vorzugsweise zwischen 10 und 50 min der nicht umgesetzte Anteil an Monomer(en) aus der Reaktionsmischung mittels Durchleiten von Stickstoff ausgetrieben und gegebenenfalls noch vorhandener Restinitiator deaktiviert. Gleichzeitig kann während oder am Ende der Desorptionsstufe ein Antioxydans in den üblichen Konzentrationen hinzugesetzt werden.

Diese der vorliegenden Erfindung zugrunde liegende Temperaturführung innerhalb des gesamten Prozessverlaufs ist, insbesondere auf Grund der Vermeidung von Temperaturerhöhungen auf oberhalb T_{R} für die der Pfropfreaktion nachfolgende Desorptionsstufe, vorteilhaft für die schonende Behandlung des Reaktionsproduktes. Nach erfolgter Restmonomer-Desorption wird das Reaktionsprodukt üblicherweise weiter auf eine Temperatur unterhalb T_{Des} - bis maximal auf Raumtemperatur - abgekühlt und dem Reaktor entnommen.

Auf überraschende Weise ist es mittels erfindungsgemäßem Verfahren gelungen, Styrol/Olefin-Mehrblockcopolymere innerhalb eines weiten Molmassenbereiches, insbesondere lineare SEBS- und lineare SEPS bzw. SEEPS mit M_{w} von ca. 40.000 bis ca. 300.000 g/mol bzw. Schmelzviskositäten entsprechend Schmelzflussraten MFR (230 °C/2,16 kg) von ca. 50 g/10 min bis MFR (320 °C/21,6 kg) von ca. 1 g/10 min, die nur im unteren Molmassenbereich (M_{w} ≤ 100.000 g/mol) mittels reaktiver Extrusion mit befriedigendem Ergebnis pfropfmodifizierbar sind, zu funktionalisieren. Die Festphasenpfropf-Modifizierung von schwieriger aufschmelzbaren Mehrblockcopolymeren mit M_{w} > 100.000 g/mol, insbesondere mit M_{w} > 150.000 g/mol und ganz besonders mit M_{w} > 200.000 g/mol, war bisher nur möglich, wenn ihre Viskosität mittels eines höheren Ölanteils (≥ 20 Masse-%, im Allgemeinen > 50 Masse-%) zuvor abgesenkt worden war, wodurch wegen des hohen Ölgehalts den resultierenden funktionalisierten Blockcopolymerisaten wichtige Einsatzgebiete, insbesondere im Automobilbereich, versagt blieben.

Die erfindungsgemäß modifizierten Styrol/Olefin-Blockcopolymere besitzen eine hohe Funktionalität, durch die hohe Adhäsions- und Schälfestigkeiten bei ihrer Anwendung in Beschichtungen, Laminaten und Verbundfolien resultieren. Weiterhin zeichnen sich die mit den erfindungsgemäßen Pfropfprodukten modifizierten Polymer-, insbesondere TPE-Compounds, durch ein verbessertes mechanisches Kennwertniveau, vor allem durch hohe Schlag- und Kerbschlagzähigkeiten, Biegefestigkeiten und Elastizitätsmoduln bei Sicherung hoher Reißdehnungswerte, sowie eine verbesserte thermische Belastbarkeit, erkennbar an niedrigeren Fogging-Werten und einer stark eingeschränkte Geruchsbelästigung, aus. Dieses hohe Eigenschaftsniveau basiert einmal auf der generellen Modifizierbarkeit von Styrol/Olefin-Blockcopolymerisaten mit unterschiedlichen Schmelzviskositäten entsprechend oben genanntem MFR-Bereich, ihrer infolge der Funktionalisierungsreaktion nicht oder nur im geringen Maße zu beobachtenden Degradation und zum anderen auf eine sehr gleichmäßige Verteilung von an der Rückgratkette angehängten (gepfropften) funktionellen Gruppen, so bei Verwendung von MSA bzw. von spezifischen MSA/Styrol-Mischungen vor allem Bernsteinsäureanhydrid (BSA)-Gruppen bzw. definierte "BSA-Styrol-Copfropf"-Spacer.

Darüber hinaus besteht der Vorteil des erfindungsgemäßen Prozesses gegenüber der Schmelze-Funktionalisierung vor allem in seiner hohen Wirtschaftlichkeit. Das ist zurückzuführen auf den einfach zu steuernden Festphasenprozess bei gleichzeitiger Erreichung hoher Monomerumsätze (sehr geringe Monomer-Restanteile) sowie in der Vermeidung einer Schädigung oder Zersetzung der Blockcopolymerstruktur, wie sie oberhalb des Blockcopolymerschmelz- bzw. -erweichungspunktes z. T. beobachtet werden. In diesem Zusammenhang ist besonders überraschend, dass mittels sehr geringer Initiatorkonzentrationen, die im Allgemeinen ein bis zwei Zehnerpotenzen unterhalb der Konzentrationen für die bekannten Festphasen- und auch noch unterhalb der für die meisten Schmelze-Pfropftechnologien liegen, mittels hoher Reaktionsgeschwindigkeiten modifizierte Styrol/Olefin-Blockcopolymere mit hohen Funktionalisierungsgraden erhalten werden.

Die erfindungsgemäßen funktionalisierten Styrol/Olefin-Blockcopolymere mit Funktionalisierungsgraden zwischen 0,02 und 10 Masse-%, vorzugsweise zwischen 0,1 und 5 Masse-%, sind als selbsthaftendes Beschichtungsmaterial auf unterschiedlichen Oberflächen, als Komponente oder separate Schicht in verschiedenen thermoplastischen Mehrschichtfolien, Laminaten sowie als Verträglichkeitsvermittler in Polymerblends und/oder -composites sehr gut geeignet.

Die erfindungsgemäß funktionalisierten Styrol/Olefin-Blockcopolymere, insbesondere solche auf der Basis von linearen SEBS und SE(E)PS, und das zu ihrer Herstellung verwendete Verfahren werden durch nachfolgende Beispiele erläutert. Dabei werden zur Charakterisierung der verwendeten Blockcopolymer-Pfropfsubstrate und der erhaltenen funktionalisierten Pfropfprodukte anstelle der MFR-Werte die direkt mit einem Schmelzindex-Gerät der Firma Göttfert (Modell MP-D) gemessenen Volumenfließindices (MVR), die den mit den für die verwendete Temperatur (230-320 °C) geltenden Schmelzedichten (zwischen 0,5 und 0,8 g/cm³) multiplizierten MFR-Werten entsprechen, angegeben.

### Beispiel 1

In einem temperierbaren, mit einer Rührvorrichtung ausgerüsteten, vertikalen 200 1 -Reaktor (Länge/Durchmesser-Verhältnis: 1,5 zu 1) werden 100 Masseteile SEEPS als Pfropfsubstrat, charakterisiert durch einen MVR (320/1,2 kg)-Wert von 4,2 g/10 min, d_{T} von 0,32 mm und einen Styrol-Anteil von 30 Masse-% (SEEPS-1), zusammen mit 0,1 Masseteilen 2,5-Dimethyl-2,5-di(tert.-butylperoxy)hexan (DHBP) und 0,1 Masseteilen Weißöl bei einer Reaktorinnentemperatur von 20 °C vorgelegt und in Stickstoff-Atmosphäre bei 80 min⁻¹ insgesamt 30 min unter Temperaturerhöhung auf 33 °C dispergiert, wobei gleichzeitig mittels Vakuum die Restfeuchte vollständig entfernt wird. Danach werden 2,1 Masseteile MSA bei 33 °C hinzugefügt, die Rührerdrehzahl auf 440 min⁻¹ erhöht und die Reaktionsmischung mittels mehrfacher Stickstoffspülung unter gleichzeitiger Temperaturerhöhung innerhalb von 20 min auf eine Dispergiertemperatur T_{D} von 55 °C inertisiert.
Unter Stickstoff-Atmosphäre und weiterer Rührung wird die Temperatur von 60 °C mit einer Aufheizgeschwindigkeit von 2,9°C/min auf eine Reaktionsendtemperatur T_{R} von 155 °C erhitzt, wonach unter Konstanthaltung von T_{R} und der Rührung von 360 bis 320 min⁻¹ die Reaktion über einen Zeitraum t_{R} von 60 min geführt wird.

Anschließend werden 0,2 Masse-% Tris-(nonylphenyl)-phosphit (TNPP) als Antioxydans hinzugefügt und die Reaktion wird beendet, indem nach Reduzierung der Rührgeschwindigkeit auf 80 min⁻¹ mittels Durchleiten von Stickstoff durch die fluide Reaktionsproduktmasse nicht umgesetztes MSA sowie flüchtige Reaktionsnebenprodukte ausgetrieben werden.

Nach einer Desorptionszeit t_{Des} von 45 min wird das auf eine Temperatur von 145 °C heruntergekühlte Reaktionsprodukt in einen Kühlmischer geführt, von wo es nach weiterer Abkühlung in den Vorratsbehälter, aus dem Proben zur nachfolgenden Kennwertbestimmung entnommen werden, gelangt.

Ermittelt werden:
- Auswaage des Reaktionsproduktes
- Gehalt an Carbonsäure, berechnet auf Masse-% MSA, mittels Rücktitration der durch den Carbonsäureanteil nicht neutralisierten Kalilauge, indem eine 2 g-Probe der Auswaage sechs Stunden mit einer Mischung aus 100 ml Xylol und 20 ml 0,1-molarer methanolischer Kalilauge bei 80°C behandelt und nach Zugabe eines Tropfens Phenolphthalein mittels 0,1-molarer Salzsäure titriert wird:
   - für die (getrocknete) Auswaage den Carbonsäuregehalt CS (berechnet als MSA-Masseanteil) und
   - für den im siedenden Methanol erhaltenen Rückstand, d. h. den vom Blockcopolymer-Rückgrat chemisch gebundenen ("gepfropften°) MSA-Masseanteil CSₑₓ, der sogenannte Funktionalisierungs- bzw. Maleinierungsgrad.

Außerdem sind bestimmt worden:
- der mittels Methanol bei Raumtemperatur gelöste Anteil der (getrockneten) Auswaage, ein niedermolekulareres MSA-Peroxid-Reaktionsprodukt PMSA, und
- der mittels siedendem Methanol aus dem Extrakt ermittelte Anteil an oligomeren MSA-Peroxid-Reaktionsprodukt P(MSA)ₑₓ.
- MVR-Wert nach ISO 1133 (320°C/21,6 kg Auflagegewicht)

Kennwerte für das maleinierte SEBS (Beispiel-Nr. 1):

| | |
|---|---|
| Auswaage | 101,90 Masseteile (Umsatz von 80,2 %) |
| Carbonsäuregehalt CS | 1,64 Masse-% |
| Funktionalisierungsgrad CSₑₓ | 1,42 Masse-% |
| PMSA-Anteil | 0,02 Masse-% |
| P(MSA)ₑₓ-Anteil | 0,08 Masse-% |
| MVR (320/21,6) | 166 cm³/10 min |

### Beispiele 2 bis 46

Entsprechend der in Beispiel 1 beschriebenen Prozessführung werden unter Verwendung eines der nachfolgenden pulverförmigen Blockcopolymer-Rückgrate

| | |
|---|---|
| SEBS-1: Styrol-Anteil=22 Ma-%; MVR (320°C/2,16 kg): | 128 cm³/ 10 min |
| SEBS-2: Styrol-Anteil=56 Ma-%; MVR <320°C/2,16 kg): | 4 cm³/10 min |
| SEBS-3: Styrol-Anteil=30 Ma-%; MVR (230°C/5 kg): | 5 cm³/10 min; M_{w}= 55.000 |
| SEBS-4: Styrol-Anteil=30 Ma-%; MVR (320°C/1,2 kg): | 4 cm³/10 min; M_{w}= 72.000 |
| SEBS-5: Styrol-Anteil=31 Ma-%; MVR (320°C/21,6 kg): | 13 cm³/ 10 min; M_{w}=120.000 |
| SEBS-6: Styrol-Anteil=32 Ma-%; MVR (320°C/21,6 kg): | 7 cm³/10 min; M_{w}=175.000 |
| SEBS-7: Styrol-Anteil=32 Ma-%; MVR <320°C/2,16 kg): | 5 cm³/10 min; M_{w}>200.000 |
| SEEPS-1: Styrol-Anteil=30 Ma.-%; MVR (320°C/1,2 kg): | 4 cm³/10 min; M_{w}= 75.000 |
| SEEPS-2: Styrol-Anteil=30 Ma.-%; MVR (320°C/21,6 kg):3 | cm³/10 min; M_{w}=176.000 |
| SEEPS-3: Styrol-Anteil=30 Ma.-%; MVR (320°C/5 kg): | 1 cm³/10 min; M_{w}>200.000 |

mit einem der nachfolgend genannten Initiatoren, einem Funktionsmonomer - außer MSA auch AS oder GMA - und gegebenenfalls einem Comonomer - außer Styrol (S) auch MMA und BA - in unterschiedlichen Konzentrationen bzw. Funktionsmonomer (FM)/ Comonomer (CM)-Masseverhältnissen weitere erfindungsgemäß funktionalisierte SEBS- und SEEPS-Blockcopolymere hergestellt.

Während die gleiche Dispergier-/Inertisierungsstufe wie in Beispiel 1 gewählt worden ist (t_{D} = (20 + 5) min; T_{D} zwischen 50 und 60 °C), sind die Aufheiz- und Reaktionsbedingungen, einschließlich die Form der Zugabe der Reaktionskomponenten (einmalige Vorlage aller Reaktionskomponenten oder Monomer-Nachdosierung) variiert worden.

Aufgeführt sind auch Beispiele mit zweistufiger Reaktionsführung (Bsp.-Nr. 11, 22, 24, 29-35, 43, 44 und 46), charakterisiert dadurch, dass nach der Dispergierung/Inertisierung zunächst in einer Zeit t_{A}* auf eine erste Reaktionstemperatur T_{R}* von 94-97 °C, bei der die Reaktion über eine Zeit t_{R}* von 18-35 min, und nach ca. zehnminütiger Aufheizung auf eine Reaktionsendtemperatur T_{R} von 111-130 °C bzw. 158-160 °C, bei der die Reaktion insgesamt über eine Zeit von 20-32 min geführt wird. Die angeführten Pfropf-Kennwerte CS, CSₑₓ und HPₑₓ (speziell P(MSA)ₑₓ oder P(AS)ₑₓ bzw. P(GMA)ₑₓ bei Verwendung von MSA oder AS bzw. GMA als FM) sind in Masse-% (Ma.-%), bezogen auf jeweils 100 Masseteile Pfropfprodukt, angegeben, wobei die im Beispiel 1 für die MSA-Titration beschriebene Säurebestimmung auch bei Verwendung von AS als FM angewandt worden ist (Angabe in Ma.-% AS). Die gepfropften GMA-Anteile sind aus der Massebilanz und Sauerstoff-Analyse ermittelt worden.

Den Rückgratpolymeren werden in einigen Beispielen gemeinsam mit dem Initiator Mengen von 0,05 bis 2 Ma-%, bezogen auf die Rückgratpolymermasse, eines hochsiedenden Weißöls (Dichte = 0,865 g/cm³, dynamische Viskosität = 0,28 Pa·s, paraffinischer/naphthenischer Kohlenwasserstoffanteil = 68/32 Ma.-%) hinzugesetzt.

### Verwendet werden nachfolgende peroxidische Initiatoren:

Dilauroylperoxid (DLPO), Dibenzoylperoxid (DBPO), Dicumylperoxid (DCUP); 2,5-Dimethyl-2,5-di(tert.-butyl-peroxy)hexan (DHBP) und 2,5-Dimethyl-2,5-di(tert.-butyl-peroxy)hexin-(3) (DYBP).

In Tabelle 1 sind als Verfahrensparameter aufgeführt:
- Beispiel-Nummer und Rückgratpolymer (Spalte 1)
- Art und Konzentration des Radikalbildners in Ma.-% (Spalten 2 und 3)
- Konzentration der FM (MSA, AS, GMA) in Ma.-% (Spalte 4) und
- Konzentration der CM (S, MMA und BA) sowie des Prozessöls in Ma.-% (Spalte 5)
- Aufheizzeiten (t_{A}, t_{A}*): durchgehend bis zur Endreaktionstemperatur T_{R} (t_{A}) oder bis zur Zwischen-Reaktionstemperatur T_{R}* (t_{A}*) in min (Spalte 6)
- Reaktionstemperaturen (T_{R}*, T_{R}) in °C (Spalte 7)
- Reaktionszeiten (t_{R}*, t_{R}) in min (Spalte 8)
- Desorptionszeit (t_{Des}) in min (Spalte 9)

Zum Vergleich sind in Tabelle 1 - unter Verwendung unterschiedlicher Ölmengen -bei T_{R} < 100 °C hergestellte funktionalisierte SEEPS (Vgl.1A: 50 Ma.-% Öl, Vgl.5A: ohne Öl; Vgl. 36A: 50 Ma.-% Öl) sowie vier modifizierten SEBS (Vgl.7A: 50 Ma.-% Öl, 12A: 80 Ma.-% Öl, Vgl.15A: ohne ÖI und Vgl.29A: 50 Ma-% Öl; Vgl.30A: Verwendung von SEBS^{#} mit M_{w}=53.000/ MFR(200 °C/5 kg)=8 g/10 min) mit angegeben.

Alle die für den Initiator, die Monomere (FM, CM) und das Weißöl (ÖI) angegebenen Mengenanteile in Ma.-% beziehen sich auf jeweils 100 Masseteile vorgelegtes Styrol/Olefin-Blockcopolymerrückgrat.

**Tabelle 1**

| Bspl.-Nr. Rückgrat | Init.-Art | Initiator [Ma.-%] | FM [Ma.-%] | CM Weißöl [Ma.-%] | t_{A}*/t_{A} [min] | T_{R}*T_{R} [°C] | t_{R}*/t_{R} [min] | t_{Des} [min] |
|---|---|---|---|---|---|---|---|---|
| 1 SEEPS-1 | DHBP | 0,08 | 2,1 MSA | 0,08 Öl | 45 | 160 | 60 | 45 |
| Vgl.1A SEEPS-1 | DBPO | 1,4 | 2,5 MSA | 2,5 S | 45 | 85 | 120 | 60 |
| | | | | 50% Öl | | | | |
| 2 SEEPS-1 | DHBP | 0,07 | 2,1 MSA | 0,07 Öl | 45 | 155 | 60 | 45 |
| 3 SEEPS-2 | DHBP | 0,08 | 2,1 MSA | 0,08 Öl | 35 | 155 | 50 | 30 |
| 4 SEEPS-2 | DHBP | 0,05 | 2,1 MSA | 0,05 Öl | 35 | 160 | 60 | 30 |
| 5 SEEPS-2 | DBPO | 0,7 | 2,0 MSA | 1,33 S | 30 | 120 | 60 | 30 |
| Vgl.5A SEEPS-2 | DLPO | 1,2 | 2,0 MSA | - | 45 | 75 | 180 | 45 |
| 6 SEBS-1 | DHBP | 0,3 | 2,1 MSA | 0,3 Öl | 25 | 146 | 60 | 45 |
| 7 SEBS-3 | DHBP | 0,4 | 2,1 MSA | 0,4 Öl | 60 | 150 | 60 | 45 |
| Vgl.7A SEBS-3 | DBPO | 2,0 | 5,0 AS | 5,0 S | 50 | 85 | 150 | 30 |
| | | | | 50% Öl | | | | |
| 8 SEBS-3 | DLPO | 1,3 | 2,1 MSA | 0,1 Öl | 50 | 105 | 60 | 45 |
| 9 SEBS-2 | DHBP | 0.1 | 2,1 MSA | 0,1 Öl | 45 | 160 | 60 | 45 |
| 10 SEBS-2 | DHBP | 0,3 | 2,1 MSA | 0,3 Öl | 40 | 150 | 60 | 45 |
| 11 SEBS-3 semi-batch | DBPO | 0,5 | 2,1 MSA | 0,5% Öl | 20* | 97*/115 | 18*/20 | 28 |
| | | 0,1 | 1,5 MSA | | 25 | 120 | 50 | 30 |
| 12 SEBS-4 | DLPO | 1,0 | 2,1 MSA | 0,1% Öl | 35 | 105 | 60 | 45 |
| Vgl.12A SEBS-4 | DLPO | 2,0 | 2,5 MSA | 2,5 S 80% Öl | 60 | 80 | 120 | 60 |
| 13 SEBS-4 | DHBP | 0.4 | 2,1 MSA | 0,4% Öl | 65 | 150 | 60 | 45 |
| 14 SEBS-5 | DHBP | 0,1 | 2,1 MSA | 0,1% Öl | 65 | 152 | 60 | 30 |
| 15 SEBS-5 | DHBP | 0,1 | 2,1 MSA | 0,3% Öl | 45 | 150 | 60 | 45 |
| Vgl.15A SEBS-5 | DBPO | 1,5 | 2,1 MSA | 0,5 S | 45 | 90 | 150 | 45 |
| 16 SEBS-6 | DHBP | 0,1 | 2,1 MSA | 0.1% Ol | 55 | 160 | 60 | 45 |
| 17 SEBS-6 | DHBP | 0,3 | 2,1 MSA | 0,3% Öl | 45 | 150 | 60 | 45 |
| 18 SEEPS-1 | DHBP | 0.1 | 2,1 MSA | 0.1% Öl | 45 | 155 | 60 | 45 |
| 19 SEEPS-2 | DYBP | 0,2 | 2,1 MSA | 5% Öl | 45 | 177 | 50 | 30 |
| 20 SEEPS-1 | DCUP | 0,7 | 4,8 AS | 5,0 MMA | 40 | 140 | 60 | 45 |
| 21 SEEPS-2 | DHBP | 0,25 | 4,8 AS | 2,4 S | 40 | 140 | 50 | 45 |
| | | | | 2% Öl | | | | |
| 22 SEBS-1 | DCUP | 0,9 | 6,0 GMA | 4,0 S | 20* | 95*/130 | 30*/20 | 40 |
| 23 SEBS-4 | DBPO | 0,8 | 4,0 GMA | 2,0 BA | 40 | 122 | 55 | 40 |
| 24 SEEPS-1 | DBPO | 0,8 | 3,6 AS | 2,4 BA | 20* | 96*/121 | 20*/30 | 40 |
| 25 SEBS-7 | DHBP | 0,15 | 2,1 MSA | 0,15 Öl | 30 | 168 | 50 | 35 |
| 26 SEBS-7 | ohne | 0,0 | 2,1 MSA | - | 40 | 170 | 45 | 35 |
| 27 SEBS-7 | DHBP | 0,1 | 2,1 MSA | 0,1 Öl | 35 | 170 | 50 | 30 |
| 28 SEBS-7 | DHBP | 0,2 | 2,1 MSA | 0,2 Öl | 45 | 166 | 50 | 40 |
| 29 SEBS-7 | DBPO | 1,4 | 3,36 MSA | 3,5 S | 30* | 97*/111 | 30*/20 | 30 |
| Vgl.29° SEBS-7 | DBPO (50%ÖI) | 1,4 | 3,36 MSA | 3,5 S | 30 | 95 | 90 | 60 |
| 30 SEBS-7 | DBPO | 0,8 | 1,92 MSA | 2,05 S | 25* | 97*/111 | 30*/20 | 35 |
| Vgl.30A SEBS^{#} | DLPO | 0.8 | 2,00 MSA | - | 30 | 75 | 120 | 90 |
| 31 SEBS-7 | DBPO | 2,0 | 1,92 MSA | 2,05 S | 20* | 97*/111 | 30*/25 | 30 |
| 32 SEBS-7 | DBPO | 0,8 | 4,80 MSA | 5,00 S | 20* | 95*/118 | 35*/22 | 35 |
| 33 SEBS-7 | DCUP | 2,0 | 4,80 MSA | 5,00 S | 25* | 97*/158 | 30*/25 | 30 |
| 34 SEBS-7 | DCUP | 1,4 | 3,36 MSA | 3,50 S | 25* | 96*/160 | 25*/32 | 35 |
| 35 SEBS-7 semi-batch | DBPO | 1,0 | 3,10 | 2,10 S | 20* | 94*/115 | 18*/20 | 28 |
| | | 1,0 | MSA | 1,40 S | 20* | 95*/121 | 20*/25 | 30 |
| | | | 2,00 MSA | 5% Öl | | | | |
| 36 SEEPS-3 | DHBP | 0,05 | 2,1 MSA | 0,1% Öl | 45 | 165 | 60 | 45 |
| Vgl.36A SEEPS-3 | DBPO (50%ÖI) | 2,0 | 4,80 AS | 5,00 S | | 95 | 90 | 60 |
| | | | | 50% Öl | | | | |
| 37 SEEPS-3 | DHBP | 0.075 | 2,1 MSA | 0,2% Öl | 45 | 164 | 60 | 45 |
| 38 SEEPS-3 | DHBP | 0,1 | 2,1 MSA | 0,1% Öl | 45 | 165 | 60 | 45 |
| 39 SEEPS-3 | DHBP | 0,15 | 2,1 MSA | 0,15% Öl | 45 | 160 | 60 | 45 |
| 40 SEEPS-3 | DHBP | 0,25 | 2,1 MSA | 0,25% Öl | 45 | 160 | 60 | 45 |
| 41 SEEPS-3 | DYBP | 0,2 | 1,92 MSA | 5% Öl | 45 | 175 | 55 | 35 |
| 42 SEBS-7 | DCUP | 0,8 | 4,80 AS | 5,00 S | 40 | 138 | 50 | 50 |
| 43 SEEPS-3 | DHBP | 0,25 | 4,80 AS | 1,20 S | 20* | 95*/120 | 25*/25 | 35 |
| | | | | 2% Öl | | | | |
| 44 SEBS-7 | DCUP | 1,4 | 6,0 GMA | 2,0 MMA | 25* | 95*/120 | 30*/20 | 30 |
| 45 SEBS-7 | DHBP | 1,2 | 4,0 GMA | 1,2 BA | 40 | 121 | 55 | 35 |
| 46 SEEPS-3 | DBPO | 1,8 | 4,80 AS | 1,2 BA | 20* | 96*/117 | 25*/25 | 35 |
| | | | | 5% Öl | | | | |

| | | | | | | | | |
|---|---|---|---|---|---|---|---|---|
| *⁾ Aufheizphase in zwei Etappen: nach Aufheizzeit t_{A}* auf eine erste Reaktions-Zwischentemperatur T_{R}*, bei der die erste Teilreaktion über die Zeit t_{R}* erfolgt, danach innerhalb von t_{A} -(t_{A}* + t_{R}*) =10 min auf T_{R}, bei der die zweite Teilreaktion in der Zeit t_{R} erfolgt. | | | | | | | | |

In Tabelle 2 sind die für die Bewertung der Reaktionsprodukte als Modifikatoren in Polymer-Blends und/oder Polymer-Composites sowie für den Direkteinsatz als Beschichtungsmaterial bzw. Haftvermittler-Schicht wichtigen Kennwerte aufgeführt:
- MVR (320 °C/unterschiedliche Auflagegewichte) in cm³/10 min (Spalte 2)
- umgesetzter Funktionsmonomeranteil CS (Spalte 3) und chemisch gebundener ("gepfropfter") MSA- oder AS- oder GMA-Anteil im Extraktionsrückstand CSₑₓ, in Ma.-% (Spalte 4)
- aus niedermolekularen Monomer-Initiator-Verbindungen bestehender extrahierter "Oligomer"-Anteil (PMSAₑₓ oder PASₑₓ bzw. PGMAₑₓ), in Ma.-% (Spalte 5) sowie
- Güte: visuelle Beurteilung gespritzter Probekörper bezüglich Oberflächengüte und Verfärbung (Gelbstich) sowie Verarbeitbarkeit von Zusammensetzungen aus 37 Masseteilen funktionalisiertes SEBS oder SEEPS, 45 Masseteilen oben verwendetes Öl und 18 Masseteilen Polypropylen zu 2 mm-Spritzplatten mit entsprechender qualitativer Benotung (Spalte 6):
   1 - sehr gut, 2 - gut, 3 - befriedigend, 4 - schlecht, 5 - nicht verarbeitbar.

**Tabelle 2**

| Bspl.-Nr. Pfropfsubstrat | MVR [cm³/10 min] (Temp. °C/Auflage kg) | | CS [Ma.-%] | CSₑₓ [Ma.-%] | HPₑₓ*⁾ [Ma.-%] | Güte |
|---|---|---|---|---|---|---|
| 1 SEEPS-1 | (320/21,6) | 166 | 1,42 | 1,64 | 0,08 | 1 |
| Vgl.1A SEEPS-1 | (320/21,6) | | 0,85 | 0,68 | 0,21 | 4 |
| | läuft durch Düse | | | | | |
| 2 SEEPS-1 | (320/21,6) | 45 | 1,40 | 1,24 | 0,06 | 1 |
| 3 SEEPS-2 | (320/21,6) | 7,4 | 1,84 | 1,63 | 0,09 | 1 |
| 4 SEEPS-2 | (320/21,6) | 4,0 | 1,13 | 0,95 | 0,07 | 2 |
| 5 SEEPS-2 | (320/21,6) | 16 | 2,12 | 1,95 | 0,16 | 2 |
| Vgl.5A SEEPS-2 | (320/21,6) | | 0,76 | 0,65 | 0,09 | 5 |
| | läuft durch Düse | | | | | |
| 6 SEBS-1 | (320/1,2) | 23 | 1,51 | 1,46 | 0,10 | 1 |
| 7 SEBS-3 | (320/21,6) | 15 | 1,96 | 1,78 | 0,16 | 2 |
| Vgl.7A SEBS-3 | läuft durch | Düse | 1,85 | 1,06 | 0,73 | 4 |
| 8 SEBS-3 | (320/21,6) | 16 | 2,16 | 1,39 | 0,43 | 1 |
| 9 SEBS-2 | (320/2,16) | 4,0 | 0,63 | 0,55 | 0,07 | 2 |
| 10 SEBS-2 | (320/2,16) | 8,5 | 1,24 | 1,14 | 0,12 | 2 |
| 11 SEBS-3 2 Stufen | | | | | | 2 |
| | (320/2,16) | 14 | 2,57 | 2,26 | 0.16 | |
| 12 SEBS-4 | (320/21,6) | 2,3 | 1,41 | 0,96 | 0,30 | 2 |
| Vgl. 12A SEBS-4 | (320/2,16) | | 0.81 | 0,40 | 0,43 | 5 |
| | läuft durch Düse | | | | | |
| 13 SEBS-4 | (320/21,6) | 3 | 1,83 | 1,38 | 0,18 | 1 |
| 14 SEBS-5 | (320/21,6) | 40 | 0,67 | 0,61 | 0,09 | 1 |
| 15 SEBS-5 | (320/2,16) | 26 | 0,92 | 0,84 | 0,07 | 2 |
| Vgl.15A SEBS-5 | läuft durch Düse | | 0,86 | 0,47 | 0,35 | 4 |
| 16 SEBS-6 | (320/2,16) | 8,3 | 0,45 | 0,40 | 0,02 | 2 |
| 17 SEBS-6 | (320/2,16) | 7,7 | 1,28 | 1,20 | 0,11 | 1 |
| 18 SEEPS-1 | (320/21,6) | 19 | 1,80 | 1,73 | 0,04 | 2 |
| 19 SEEPS-2 | (320/2,16) | 21 | 1,65 | 1,54 | 0,07 | 2 |
| 20 SEEPS-1 | (320/2,16) | 35 | 3,22 | 2,75 | 0,35 | 1 |
| 21 SEEPS-2 | (320/2,16) | 5,5 | 4,03 | 3,55 | 0,33 | 2 |
| 22 SEBS-1 | (320/2,16) | 26 | 3,81 | 3,43 | 0,27 | 2 |
| 23 SEBS-4 | (320/2,16) | 17 | 2,53 | 2,18 | 0,21 | 2 |
| 24 SEEPS-1 | (320/2,16) | 2,6 | 2,81 | 2,42 | 0,23 | 2 |
| 25 SEBS-7 | (320/5) | 11 | 1,26 | 1,13 | 0,13 | 1 |
| 26 SEBS-7 | (320/5) | 3,7 | 0,44 | 0,39 | 0,04 | 1 |
| 27 SEBS-7 | (320/5) | 7,1 | 1,05 | 1,01 | 0,09 | 1 |
| 28 SEBS-7 | (320/5) | 7,4 | 1,54 | 1,43 | 0,16 | 2 |
| 29 SEBS-7 | (320/5) | 16 | 2,12 | 1,95 | 0,16 | 2 |
| Vgl. 29A SEBS-7 | läuft durch Düse | | 0,85 | 0,68 | 0,21 | 4 |
| 30 SEBS-7 | (320/5) | 16 | 1,75 | 1,63 | 0,11 | 1 |
| Vgl.30A SEBS^{#} | (320/5) | | 0,76 | 0,65 | 0,09 | 5 |
| | läuft durch Düse | | | | | |
| 31 SEBS-7 | (320/5) | 12 | 1,59 | 1,45 | 0,16 | 2 |
| 32 SEBS-7 | (320/5) | 18 | 3,03 | 2,39 | 0,17 | 1 |
| 33 SEBS-7 | (320/5) | 9 | 2,93 | 2,53 | 0,20 | 2 |
| 34 SEBS-7 | (320/5) | 12 | 2,39 | 1,97 | 0,14 | 2 |
| 35 SEBS-7 2 Stufen | (320/2,16) | 14 | 1,24 | 1,17 | 0.16 | 1 |
| | | | 2,57 | 2,26 | 0,02 | 2 |
| 36 SEEPS-3 | (320/21,6) | 4,4 | 0,63 | 0,56 | 0,02 | 2 |
| Vgl. 36A SEEPS-3 | (320/21,6) | | 0.91 | 0,65 | 0,33 | 5 |
| | läuft durch Düse | | | | | |
| 37 SEEPS-3 | (320/21,6) | 9,5 | 1,47 | 1,11 | 0,05 | 1 |
| 38 SEEPS-3 | (320/21,6) | 9,1 | 1,75 | 1,67 | 0,08 | 1 |
| 39 SEEPS-3 | (320/21,6) | 11 | 1,84 | 1,66 | 0,11 | 2 |
| 40 SEEPS-3 | (320/21,6) | 7,3 | 1,64 | 1,52 | 0,08 | 2 |
| 41 SEBS-7 | (320/5) | 21 | 1,65 | 1,54 | 0,07 | 2 |
| 42 SEBS-7 | (320/5) | 35 | 3,52 | 2,85 | 0,35 | 3 |
| 43 SEEPS-3 | (320/21,6) | 5,5 | 4,03 | 3,55 | 0,33 | 2 |
| 44 SEBS-7 | (320/5) | 26 | 3,81 | 3,43 | 0,27 | 2 |
| 45 SEBS-7 | (320/5) | 17 | 3,23 | 2,83 | 0,21 | 3 |
| 46 SEEPS-3 | (320/21,6) | 2,6 | 3,61 | 3,22 | 0,23 | 2 |

| | | | | | | |
|---|---|---|---|---|---|---|
| *⁾ FM=MSA: P(MSA)ₑₓ; FM=AS: P(AS)ₑₓ ; FM=GMA : P(GMA)ₑₓ | | | | | | |

Durch Wahl der konkreten Prozessparameter (Temperatur/Zeit-Regime, Initiator-/ Funktionsmonomer-Konzentrationen, Comonomer- und/oder Ölanteil, Monomer/ Initiator-Masseverhältnis) sind spezifische Produktkennwerte, insbesondere unterschiedliche Funktionalisierungsgrade mit einem zumeist zu vernachlässigendem "Oligomer"-Anteil HPₑₓ (PMSAₑₓ, PASₑₓ, PGMAₑₓ) sowie die für die beabsichtigte Verwendung bzw. Verarbeitung erforderlichen Viskositäten entsprechend spezifischen MFR- bzw. MVR-Werten, einstellbar.

## Patentansprüche

1. Funktionalisierte Styrol/Olefin-Blockcopolymere mit einem Funktionalisierungsgrad zwischen 0,02 und 10 Masse-%, erhältlich durch ein Verfahren, bei dem
• 70 bis 99,7 Masse-% eines partikulären Styrol/Olefin-Blockcopolymers mit einer Schmelzflussrate MFR (230 °C/2,16 kg) von 200 g/10 min bis MFR (300 °C/2,16 kg) < 0,2 g/10 min (nach ISO 1133) sowie einem mittleren Teilchendurchmesser zwischen 0,01 und 8 mm (Pfropfsubstrate) unter Aufrechterhaltung ihres fest-fluiden Zustandes mittels
• 0,3 bis 20 Masse-% eines Funktionsmonomers, ausgewählt aus einer Reihe von möglichen Funktionsmonomeren, umfassend die α,β-ethylenisch ungesättigte Dicarbonsäure Fumarsäure und ihr Anhydrid, Itaconsäureanhydrid sowie das α,β-ethylenisch ungesättigte Epoxid Glycidylacrylat, einschließlich Mischungen des Funktionsmonomers mit einem Comonomer, und unter Verwendung von
• einer auf das Blockcopolymer-Rückgrat bezogenen Konzentration zwischen 0,01 und 1 Masse-% eines organischen peroxidischen Radikalbildners, der eine Halbwertszeit zwischen 2 und 150 min im Temperaturbereich zwischen 230 und 70 °C besitzt, wobei der peroxygruppenhaltige Radikalbildner unter tert.-Butylperbenzoat, Dicumylperoxid, 2,5-Dimethyl-2,5-di(tert.-Butylperoxy)hexan, 2,5 Dimethyl-2,5-di(tert.-Butylperoxy)hexin-(3) und Di-tert.-Butylperoxid ausgewählt wird,
bei Reaktionstemperaturen oberhalb von 100 °C, die zwischen 100 und 200 °C liegen, pfropfmodifiziert wird.

2. Funktionalisierte Styrol/Olefin-Blockcopolymere mit einem Funktionalisierungsgrad zwischen 0,02 und 10 Masse-% nach Anspruch 1, **dadurch gekennzeichnet, dass** als zu modifizierende Rückgratpolymere lineare oder radiale Styrol/Olefin-Mehrblockcopolymerisate mit olefinischen Restunsättigungsgraden < 20 %, vorzugsweise ≤ 5 %, und einem in den Endblöcken enthaltenen Gesamtstyrolanteil zwischen 5 und 85 %, bezogen auf die Blockcopolymermasse, in partikulärer trocken-fließfähiger Form eingesetzt werden.

3. Funktionalisierte Styrol/Olefin-Blockcopolymere mit einem Funktionalisierungsgrad zwischen 0,02 und 10 Masse-% nach den Ansprüchen 1 und 2, **dadurch gekennzeichnet, dass** als zu modifizierende Rückgratpolymere die durch selektive Hydrierung von linearen Styrol/Butadien/Styrol-Dreiblockcopolymeren (SBS beziehungsweise asymmetrische SBS'), wobei S und S' Styrolblöcke mit unterschiedlichen Sequenz-Molmassen darstellen, mit einem in den Endblöcken (S, S') im Blockcopolymer enthaltenen Gesamtstyrolanteil zwischen 5 und 85 Masse-%, vorzugsweise zwischen 10 und 70 Masse-%, sowie einem im Butadienmittelblock enthaltenen Vinylgruppengehalt zwischen 10 und 80 %, vorzugsweise zwischen 25 und 65 %, hergestellten Styrol/Ethen-Buten/Styrol-Dreiblockcopolymere (SEBS, SEBS') sowie die entsprechenden aus Styrol/Isopren/Styrol- (SIS beziehungsweise asymmetrischen SIS') oder Styrol/Butadien-Isopren/Styrol-Dreiblockcopolymeren (SBIS beziehungsweise asymmetrischen SBIS') hergestellten Styrol/Ethen-Propen/Styrol- (SEPS, SEPS') oder Styrol/Ethen-Ethen-Propen/Styrol-Dreiblockcopolymere (SEEPS, SEEPS') und die entsprechenden Vierblockcopolymere mit jeweils einem zusätzlichen olefinischen Außenblock EB oder EP beziehungsweise EEP (SEBSEB, SEPSEP beziehungsweise SEEPSEEP), wobei die Styrol- und/oder Olefinblöcke gleiche oder auch unterschiedliche Sequenz-Molmassen besitzen können, in pulveriger, flockiger, krümeliger, körniger, granularer oder anderer trocken-fließfähiger Form eingesetzt werden.

4. Funktionalisierte Styrol/Olefin-Blockcopolymere mit einem Funktionalisierungsgrad zwischen 0,02 und 10 Masse-% nach einem oder mehreren der Ansprüche 1 bis 3, **dadurch gekennzeichnet, dass** das Rückgratpolymer in einer Zusammensetzung 80 bis 100 Masse-% Styrol/Olefin-Blockcopolymerisat und 20 bis 0 Masse-% organisches Lösemittel und/oder vollständig oder überwiegend aus paraffinischen und/oder naphthenischen Anteilen bestehendem Mineralöl eingesetzt wird.

5. Funktionalisierte Styrol/Olefin-Blockcopolymere mit einem Funktionalisierungsgrad zwischen 0,02 und 10 Masse-% nach einem oder mehreren der Ansprüche 1 bis 4, **dadurch gekennzeichnet, dass** das Funktionsmonomer (FM) als Mischung mit einem Comonomer (CM) aus der Reihe der α,β-ethylenisch-ungesättigten Vinylaromaten und/oder C₁- bis C₁₂-Alkylester der Acryl- oder Methacrylsäure in einer Zusammensetzung 100 bis 20 Masse-% FM und 0 bis 80 Masse-% CM eingesetzt wird.

6. Funktionalisierte Styrol/Olefin-Blockcopolymere mit einem Funktionalisierungsgrad zwischen 0,02 und 10 Masse-% nach einem oder mehreren der Ansprüche 1 bis 5, **dadurch gekennzeichnet, dass** Funktionsmonomer (FM)/Comonomer (CM)-Mischungen in einem Verhältnis 90 bis 30 Masse-% FM und 10 bis 70 Masse-% CM eingesetzt werden.

## Claims

1. Functionalized styrene/olefin block copolymers with a degree of functionalization of between 0.02 and 10% by mass, obtainable via a process which, at reaction temperatures above 100°C, which are between 100 and 200°C, graft-modifies
• 70 to 99.7% by mass of a particulate styrene/olefin block copolymer with a melt flow rate MFR (230°C/2.16 kg) of 200 g/10 min to MFR (300°C/2.16 kg) < 0.2 g/10 min (in accordance with ISO 1133) and with an average particle diameter between 0.01 and 8 mm (graft substrate) while maintaining their solid/fluid condition by means of
• 0.3 to 20% by mass of a functional monomer selected from a group of possible functional monomers comprising the α,β-ethylenically unsaturated dicarboxylic acid fumaric acid and its anhydride, itaconic anhydride and the α,β-ethylenically unsaturated epoxide glycidyl acrylate, inclusive of mixtures of the functional monomer with a comonomer, and with use of
• a concentration between 0.01 and 1% by mass, based on the main structure of the block copolymer, of an organic peroxidic free-radical generator which has a half-life time between 2 and 150 min in the temperature range between 230 and 70°C, where the free-radical generator containing peroxy groups is selected from tert-butyl perbenzoate, dicumyl peroxide, 2,5-dimethyl-2,5-di(tert-butylperoxy)hexane, 2,5-dimethyl-2,5-di(tert-butylperoxy)hex-3-yne and di-tert-butyl peroxide.

2. Functionalized styrene/olefin block copolymers with a degree of functionalization between 0.02 and 10% by mass according to Claim 1, **characterized in that** main-structure polymers used for modification comprise linear or radial styrene/olefin multiblock copolymers with degrees of residual olefinic unsaturation < 20%, preferably ≤ 5%, and with total styrene content present in the terminal blocks of between 5 and 85%, based on the mass of the block copolymer, in particulate dry-flowable form.

3. Functionalized styrene/olefin block copolymers with a degree of functionalization between 0.02 and 10% by mass according to Claims 1 and 2, **characterized in that** main-structure polymers used for modification comprise the styrene/ethene-butene/styrene three-block copolymers (SEBS, SEBS') produced via selective hydrogenation of linear styrene/butadiene/styrene three-block copolymers (SBS or asymmetric SBS'), where S and S' are styrene blocks with different molar masses of the sequences, with a total styrene content present in the terminal blocks (S, S') of between 5 and 85% by mass in the block copolymer, preferably between 10 and 70% by mass, and with a vinyl group content present in the butadiene middle block of between 10 and 80%, preferably between 25 and 65%, and also the corresponding styrene/ethene-propene/styrene three-block copolymers (SEPS, SEPS') or styrene/ethene-ethene-propene/styrene three-block copolymers (SEEPS, SEEPS') produced from styrene/isoprene/styrene three-block copolymers (SIS or asymmetrical SIS') or from styrene/butadiene-isoprene/styrene three-block copolymers (SBIS or asymmetrical SBIS'), and the corresponding four-block copolymers with in each case an additional olefinic external block EB or EP and, respectively, EEP (SEBSEB, SEPSEP and, respectively, SEEPSEEP), where the styrene blocks and/or olefin blocks can have identical or else different molar masses of the sequences, in the form of powder, of flakes, of crumb, of grains, of granules or in any other dry-flowable form.

4. Functionalized styrene/olefin block copolymers with a degree of functionalization between 0.02 and 10% by mass according to one or more of Claims 1 to 3, **characterized in that** the main-structure polymer is used in a composition of 80 to 100% by mass of styrene/olefin block copolymer and 20 to 0% by mass of organic solvent and/or of mineral oil composed entirely or predominantly of paraffinic and/or naphthenic fractions.

5. Functionalized styrene/olefin block copolymers with a degree of functionalization between 0.02 and 10% by mass according to one or more of Claims 1 to 4, **characterized in that** the functional monomer (FM) is used as mixture with a comonomer (CM) from the group of the α,β-ethylenically unsaturated vinylaromatics and/or C₁-C₁₂-alkyl esters of acrylic or methacrylic acid in a composition of 100 to 20% by mass of FM and 0 to 80% by mass of CM.

6. Functionalized styrene/olefin block copolymers with a degree of functionalization between 0.02 and 10% by mass according to one or more of Claims 1 to 5, **characterized in that** functional monomer (FM)/comonomer (CM) mixtures are used in a ratio of 90 to 30% by mass of FM and 10 to 70% by mass of CM.

## Revendications

1. Copolymères séquencés fonctionnalisés de styrène / oléfine présentant un degré de fonctionnalisation de 0,02 à 10 % en masse, et pouvant être obtenus par un procédé dans lequel :
• 70 à 99,7 % en masse d'un copolymère séquencé particulaire de styrène / oléfine ayant un indice de fluidité à chaud MFR (230 °C, 2,16 kg) de 200 g/10 mn à MFR (300 °C, 2,16 kg) < 0,2 g/10 mn (selon ISO 1133), ainsi qu'un diamètre moyen de particules de 0,01 à 8 mm (substrats greffés) est modifié par greffage en conservant son état solide-fluide au moyen de
• 0,3 à 20 % en masse d'un monomère fonctionnel sélectionné dans une série de monomères fonctionnels possibles, comprenant l'acide dicarboxylique d'acide fumarique insaturé au niveau du groupement α,β-éthylénique et son anhydride, l'anhydride d'acide itaconique, ainsi que le glycidylacrylate d'époxyde insaturé au niveau du groupement α,β-éthylénique, notamment des mélanges du monomère fonctionnel avec un comonomère, et en utilisant
• une concentration, se rapportant au squelette du copolymère séquencé, de 0,01 à 1 % en masse d'un agent radicalaire organique au peroxyde qui possède une demi-vie entre 2 et 150 mn dans une plage de températures de 230 à 70 °C, où l'agent radicalaire contenant des groupes peroxy est sélectionné parmi le tert.-butylperbenzoate, le peroxyde de dicumyle, le 2,5-diméthyl-2,5-di(tert.-butylperoxy)hexane, la 2,5-diméthyl-2,5-di(tert.-butylperoxy)hexine-(3) et le di-tert.-butylperoxyde,
à des températures réactionnelles supérieures à 100 °C, qui sont comprises entre 100 et 200 °C.

2. Copolymères séquencés fonctionnalisés de styrène / oléfine présentant un degré de fonctionnalisation de 0,02 à 10 % en masse selon la revendication 1, **caractérisés en ce que** l'on utilise en tant que polymères-squelette à modifier des copolymères multiséquencés linéaires ou radiaux de styrène / oléfine présentant un degré d'insaturation résiduelle en oléfine < 20 %, de préférence ≤ 5 %, et comportant une fraction totale de styrène obtenue dans les blocs terminaux de 5 à 85 %, sur la base de la masse du copolymère séquencé, en particulier sous une forme particulaire sèche et fluide.

3. Copolymères séquencés fonctionnalisés de styrène / oléfine présentant un degré de fonctionnalisation de 0,02 à 10 % en masse selon les revendications 1 et 2, **caractérisés en ce que** l'on utilise en tant que polymères-squelette à modifier des copolymères triséquencés de styrène / éthène-butène / styrène (SEBS, SEBS') fabriqués par hydrogénation sélective de copolymères triséquencés linéaires de styrène / butadiène / styrène (SBS, ou SBS' asymétriques), où S et S' représentent des blocs styrène avec différentes masses molaires de séquence, présentant une fraction totale de styrène contenu dans les blocs terminaux (S, S') du copolymère séquencé entre 5 et 85 % en masse, de préférence entre 10 et 70 % en masse, ainsi qu'une teneur en groupes vinyle contenus dans le bloc central de butadiène entre 10 et 80 %, de préférence entre 25 et 65 %, ainsi que des copolymères triséquencés de styrène / éthène-propène / styrène (SEPS, SEPS') ou de styrène / éthène-éthène-propène / styrène (SEEPS, SEEPS') correspondants fabriqués à partir de copolymères triséquencés de styrène / isoprène / styrène (SIS ou SIS' asymétrique) ou de styrène / butadiène-isoprène / styrène (SBIS ou SBIS' asymétrique) et des copolymères quadriséquencés correspondants comportant respectivement un bloc externe oléfinique supplémentaire EB ou EP ou EEP (SEBSEB, SEPSEP ou SEEPSEEP), dans lesquels les blocs styrène et/ou oléfine peuvent posséder des masses molaires de séquence identiques ou différentes, sous une forme pulvérulente, de flocons, de grumeaux, de grains, de granulés ou une autre forme sèche et fluide.

4. Copolymères séquencés fonctionnalisés de styrène / oléfine présentant un degré de fonctionnalisation de 0,02 à 10 % en masse selon une ou plusieurs des revendications 1 à 3, **caractérisés en ce que** le polymère-squelette est utilisé dans une composition de 80 à 100 % en masse de copolymère séquencé de styrène / oléfine et de 20 à 0 % en masse de solvant organique et/ou d'huile minérale composée entièrement ou essentiellement de fractions paraffiniques et/ou naphténiques.

5. Copolymères séquencés fonctionnalisés de styrène / oléfine, présentant un degré de fonctionnalisation de 0,02 à 10 % en masse selon une ou plusieurs des revendications 1 à 4, **caractérisés en ce que** le monomère fonctionnel (MF) est utilisé en tant que mélange avec un comonomère (CM) de la série des aromates vinyliques insaturés au niveau du groupement α,β-éthylénique et/ou des alkylesters en C₁ à C₁₂ de l'acide acrylique ou méthacrylique dans une composition de 100 à 20 % en masse de MF et de 0 à 80 % en masse de CM.

6. Copolymères séquencés fonctionnalisés de styrène / oléfine présentant un degré de fonctionnalisation de 0,02 à 10 % en masse selon une ou plusieurs des revendications 1 à 5, **caractérisés en ce que** l'on utilise des mélanges de monomère fonctionnel (MF) / comonomère (CM) selon un rapport de 90 à 30 % en masse de MF et 10 à 70 % en masse de CM.
